# EUROPEAN PATENT SPECIFICATION

(11) **EP 2 837 791 B1**
(45) Date of publication and mention of the grant of the patent: **12.09.2018**
(21) Application number: 13804696.6
(22) Date of filing: 12.06.2013
(51) Int. Cl.: F02B 37/24, F01D 11/00, F01D 17/16, F01N 3/023

(54) **SEAL STRUCTURE AND VARIABLE-GEOMETRY TURBOCHARGER**
DICHTUNGSSTRUKTUR UND AUFLADER MIT VARIABLER VERDRÄNGUNG
STRUCTURE DE JOINT ÉTANCHE ET TURBOCOMPRESSEUR À DÉBIT VARIABLE

(30) Priority: 15.06.2012 JP 2012135572
(43) Date of publication of application: 18.02.2015
(73) Proprietor: IHI Corporation, Tokyo 135-8710 (JP)
(72) Inventor: YOSHIDA, Munehiro, Tokyo 135-8710 (JP); MORI, Atsushi, Tokyo 135-8710 (JP); MINETA, Tomomi, Tokyo 135-8710 (JP)
(74) Representative: Carpmael, Robert Maurice Charles
(86) International application number: PCT/JP2013/066257
(87) International publication number: WO 2013/187448

(56) References cited:
- JP-A- H11 125 120
- JP-A- H11 125 120
- JP-A- H11 229 886
- JP-A- 2002 349 345
- JP-A- 2002 349 345
- JP-A- 2010 138 885
- JP-A- 2012 002 140
- JP-A- 2012 002 140

## Description

### [Technical Field]

The present invention relates to: a steal structure configured to inhibit a liquid such as fuel from leaking from between two mutually fastened housings; and a variable-geometry turbocharger including the seal structure.

### [Background Art]

Conventional variable-geometry turbochargers are equipped with a variable nozzle unit capable of altering the passage area of an exhaust gas to be supplied to a turbine impeller side. This variable nozzle unit is mounted on a turbine housing by use of a support ring that supports the variable nozzle unit. An outer peripheral edge portion of the support ring is held between opposed surfaces of the turbine housing and the bearing housing.

Such a variable-geometry turbocharger includes a filter which is arranged downstream of an outlet of the turbine impeller. This filter collects particulates (matter in the form of particles) in the exhaust gas. The particulates gradually accumulate in the filter. For this reason, while the variable-geometry turbocharger is in operation, unburned fuel is sometimes supplied to the inside of the turbine housing for the purpose of regenerating the filter. In this filter regeneration, the unburned fuel is burned with the assistance of a catalyst arranged between the outlet of the turbine impeller and the filter. The burning of the unburned fuel raises the temperature of the filter, thereby burning the particulates having accumulated in the filter, and removing the particulates.

The conventional variable-geometry turbocharger usually includes a seal structure configured to inhibit the unburned fuel, which is liquefied after the operation is stopped, from leaking from between the turbine housing and the bearing housing.

An annular mounting groove is formed in a side surface of the turbine housing which is opposed to the bearing housing. An annular gasket is provided in the mounting groove. The gasket is pressed by and held between a bottom surface of the mounting groove and a side surface of the outer peripheral edge portion of the support ring. Thereby, the bottom surface of the mounting groove and the side surface of the support ring function as seal surfaces for the gasket. As a consequence, the liquefied unburned fuel is inhibited from leaking from between the turbine housing and the bearing housing.

### [Citation List]

### [Patent Literature]

[PTL 1] Japanese Patent Application Laid-Open Publication No. 2012-2140
[PTL 2] Japanese Patent Application Laid-Open Publication No. 2010-242520

### [Summary of Invention]

### [Technical Problem]

The support ring is usually formed by press working. In the support ring thus formed, a side surface to come into contact with the gasket is likely to undulate. If the side surface undulates, the adhesion of the side surface to the gasket deteriorates. Accordingly, this undulation is likely to worsen the sealing performance of preventing the unburned fuel from leaking from between the turbine housing and the bearing housing.

An object of the present invention is to provide: a seal structure configured to inhibit a liquid such as fuel from leaking from between two mutually fastened housings; and a variable-geometry turbocharger including the seal structure.

JP2012002140A discloses a variable-geometry turbocharger comprising a turbine housing in which a turbine impeller is rotatably provided;a bearing housing in which a rotor shaft connected with the turbine impeller is rotatably provided;a variable nozzle unit capable of altering a passage area of an exhaust gas to be supplied to the turbine impeller ;a support ring attached to the variable nozzle unit , including an outer peripheral edge portion pressed by and held between a side surface of the turbine housing and a side surface of the bearing housing.

JPH11125120A discloses a variable geometry turbocharger in which the elastic deformation of a gasket between the centre housing and a back plate of a variable nozzle mechanism is adjusted to vary the clearance between the nozzle vane and the turbine housing.

JP2002349345A discloses an engine cylinder head gasket with a molybdenum disulphide coating.

The invention is in the turbocharger of claim 1.

It should be noted that in the specification and the scope of claims in this application, the "axial direction" means an axial direction of the rotator shaft of the variable-geometry turbocharger, or an axial direction of the turbine impeller. Furthermore, the "annular mounting step portion" means to include an annular mounting groove.

### [Advantageous Effects of Invention]

The present invention makes it possible to provide: the seal structure configured to inhibit a liquid such as fuel from leaking from between the two mutually-fastened housings; and the variable-geometry turbocharger including the seal structure.

### [Brief Description of Drawings]

[Fig. 1]

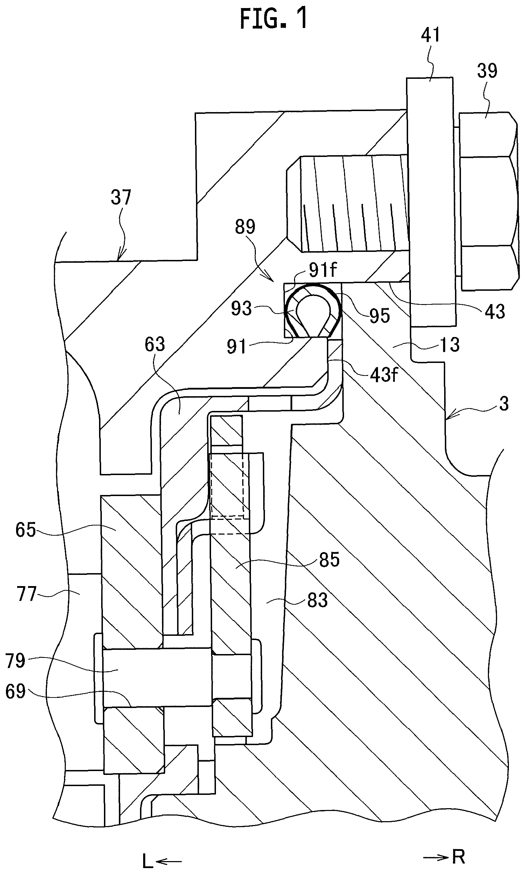

   Fig. 1 is a diagram showing a seal structure of an embodiment of the present invention.
[Fig. 2]

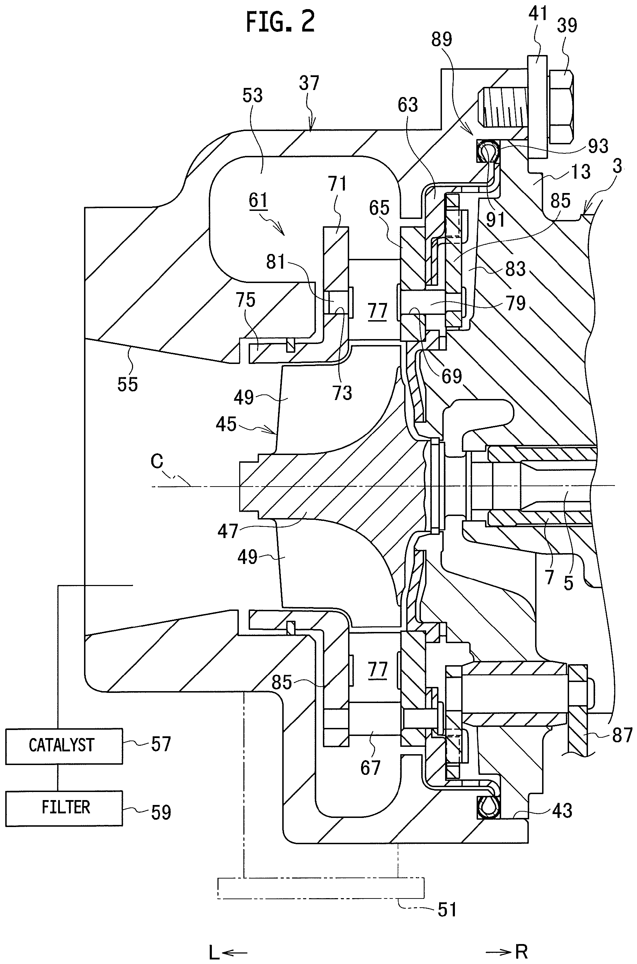

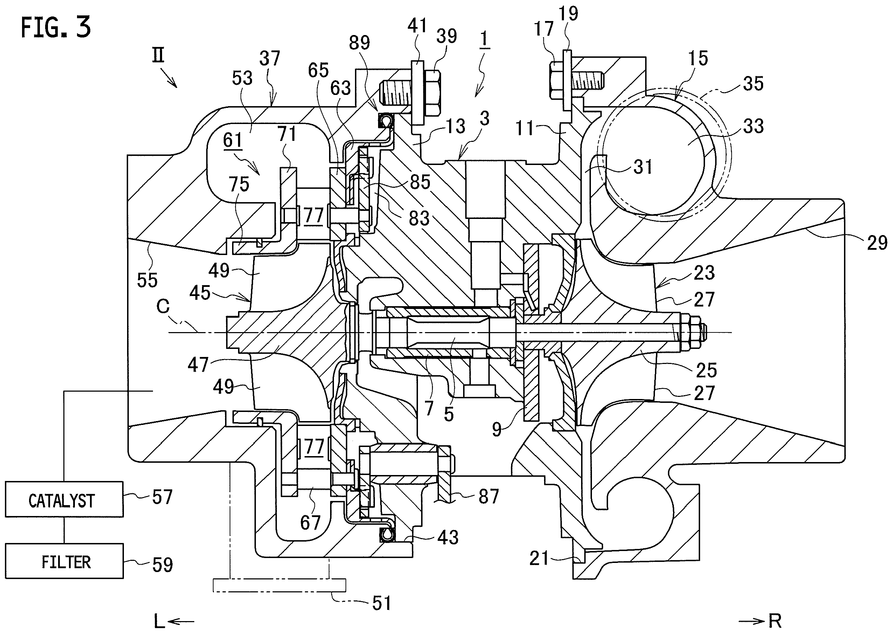

   Fig. 2 is a magnified view of a portion indicated with an arrow II in Fig. 3.
[Fig. 3]
   Fig. 3 is a front sectional view of a variable-geometry turbocharger of the embodiment of the present invention.
[Fig. 4]

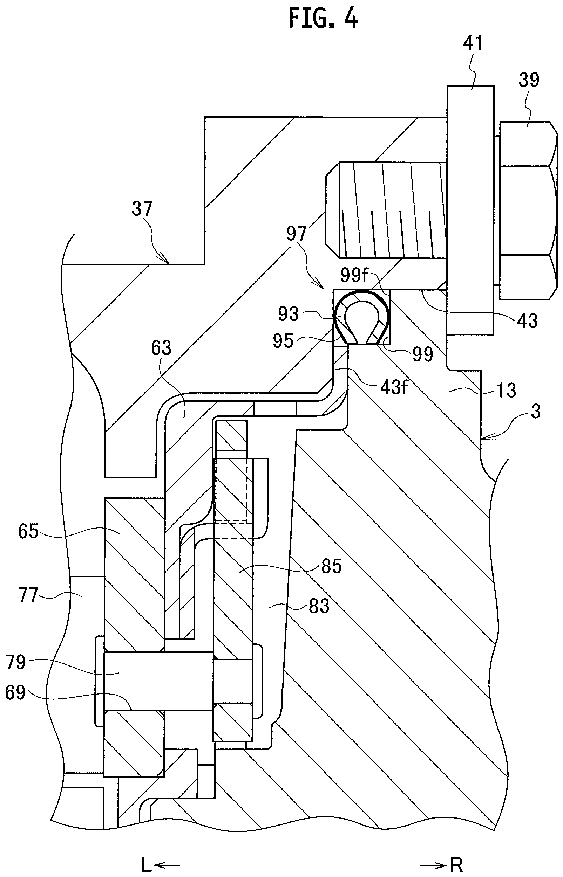

   Fig. 4 is a diagram showing a seal structure of Modification 1 of the embodiment of the present invention.
[Fig. 5]

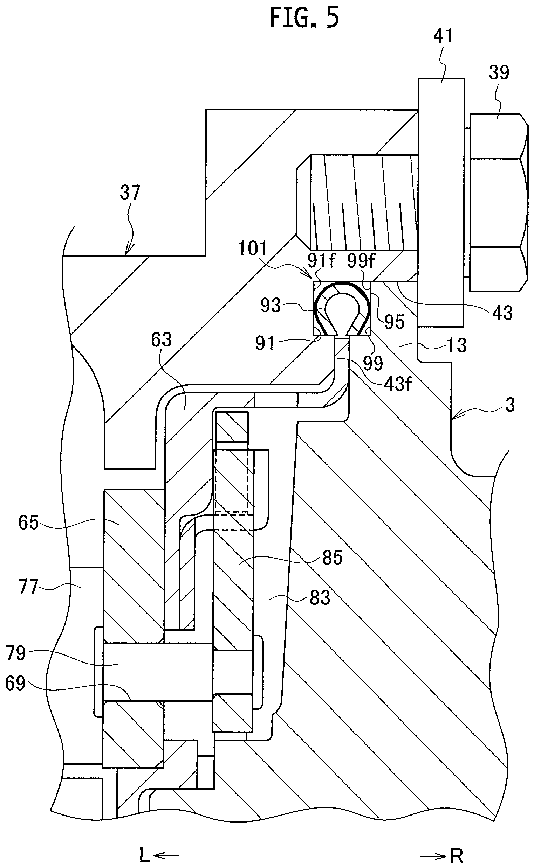

   Fig. 5 is a diagram showing a seal structure of Modification 2 of the embodiment of the present invention.

### [Description of Embodiments]

Referring to Figs. 1 to 3, descriptions will be provided for an embodiment of the present invention. It should be noted that as shown in drawings, reference sign "L" denotes a leftward direction, and reference sign "R" denotes a rightward direction.

### [Embodiment of Present Invention]

As shown in Fig. 3, a variable-geometry turbocharger 1 of the embodiment of the present invention is configured to supercharge (compress) air to be supplied to an engine by use of energy of an exhaust gas from the engine.

The variable-geometry turbocharger 1 includes a bearing housing 3. A radial bearing 7 and a pair of thrust bearings 9 are provided in the bearing housing 3. The radial bearing 7 and the pair of thrust bearings 9 rotatably support a rotor shaft (a turbine shaft) 5 extending in the left-right direction. A flange 11 is formed on the right side of the bearing housing 3 (one side in an axial direction of the rotor shaft 5) . A flange 13 is formed on the left side of the bearing housing 3 (the opposite side in the axial direction of the rotor shaft 5).

A compressor housing 15 is attached to the flange 11 by use of multiple fastening bolts 17 and multiple washers 19. It should be noted that: out of the multiple sets of the fastening bolts 17 and the washers 19, only one set of the fastening bolt 17 and the washer 19 is shown in Figs. 2 and 3; and the illustration of the other sets of the fastening bolts 17 and the washers 19 is omitted in Figs. 2 and 3. A fitting recessed portion 21 into which the flange 11 is fitted is formed on the left side of the compressor housing 15. A compressor impeller 23 is provided in the compressor housing 15 in a way that the compressor impeller 23 is rotatable around its axial center C (in other words, an axial center of the rotor shaft 5). The compressor impeller 23 compresses air by use of its centrifugal force. Furthermore, the compressor impeller 23 includes a compressor wheel 25 and multiple compressor blades 27. The compressor wheel 25 is integrally connected to the right end portion of the rotor shaft 5. The multiple compressor blades 27 are provided on an outer peripheral surface of the compressor wheel 25, and placed at equal intervals in the circumferential direction of the compressor wheel 25.

In the compressor housing 15, an air introduction port 29 is formed on an inlet side of the compressor impeller 23 (in the right side portion of the compressor housing 15) . The air introduction port 29 is connected to an air cleaner (whose illustration is omitted) configured to clean the air. The air introduction port 29 introduces the air into the compressor impeller 23. An outlet side of the compressor impeller 23 forms an annular diffuser passage 31 placed between the bearing housing 3 and the compressor housing 15, and configured to boost the compressed air. The diffuser passage 31 communicates with the air introduction port 29. Furthermore, a scroll passage 33 is formed in the compressor housing 15. The scroll passage 33 is shaped like a scroll around the compressor impeller 23, and communicates with the diffuser passage 31. Moreover, an air discharge port 35 is formed at an appropriate position in the compressor housing 15. The air discharge port 35 discharges the compressed air. The air discharge port 35 communicates with the compressor scroll passage 33, and is connected to an intake manifold (whose illustration is omitted) of the engine.

As shown in Figs. 2 and 3, a turbine housing 37 is attached to the flange 13 by use of multiple fastening bolts 39 and multiple washers 41. It should be noted that: out of the multiple sets of the fastening bolts 39 and the washers 41, only one set of the fastening bolt 39 and the washer 41 is shown in Figs. 2 and 3; and the illustration of the other sets of the fastening bolts 39 and the washers 41 is omitted in Figs. 2 and 3. A fitting recessed portion 43 into which the flange 13 is fitted is formed on the right side of the turbine housing 37. A turbine impeller 45 is provided in the turbine housing 37 in a way that the turbine impeller 45 is rotatable around an axial center (the axial center of the turbine impeller 45, in other words, the axial center of the rotor 5) C. The turbine impeller 45 produces rotational force (rotational torque) by use of pressure energy of the exhaust gas. The turbine impeller 45 includes a turbine wheel 47 and multiple turbine blades 49. The turbine wheel 47 is integrally provided to the left end portion of the rotor shaft 5. The multiple turbine blades 49 are provided on an outer peripheral surface of the turbine wheel 47, and placed at equal intervals in the circumferential direction of the turbine wheel 47.

A gas introduction port 51 is formed at an appropriate position in the turbine housing 37. The gas introduction port 51 is connected to an exhaust manifold (whose illustration is omitted) of the engine, and introduces the exhaust gas into the turbine impeller 45. A turbine scroll passage 53 is formed in the turbine housing 37. The turbine scroll passage 53 is shaped like a scroll around the turbine impeller 45, and communicates with the gas introduction port 51. A gas discharge port 55 is formed on an outlet side of the turbine impeller 45 in the turbine housing 37 (on the left side portion of the turbine housing 37) . The gas discharge port 55 communicates with the turbine scroll passage 53, and discharges the exhaust gas from the turbine impeller 45. Furthermore, the gas discharge port 55 is connected to a catalyst 57 having oxidative capacity, and a filter 59 configured to collect particulates (matter in the form of particles) in the exhaust gas. Once a predetermined amount of particulates accumulate in the filter 59 while the variable-geometry turbocharger 1 is in operation, unburned fuel for regenerating the filter 59 is supplied (introduced) into the turbine housing 37 from the gas introduction port 51.

The variable-geometry turbocharger 1 is equipped with a variable nozzle unit 61 capable of altering the passage area (a flow rate) of the exhaust gas to be supplied to the turbine impeller 45 side.

As shown in Fig. 2, in the turbine housing 37, a support ring (an attachment ring) 63 is arranged coaxial with the turbine impeller 45. The support ring 63 supports a variable nozzle 77 and the like, and concurrently holds them inside the turbine housing 37. An outer peripheral edge portion of the support ring 63 is pressed by and held between a bottom surface of the fitting recessed portion 43 and the left side surface of the flange 13. In addition, the support ring 63 is provided with a nozzle ring 65. The nozzle ring 65 is provided integrally by use of multiple connecting pins 67, and coaxially with the turbine impeller 45. Multiple first support holes 69 are formed in the nozzle ring 65 at equal intervals in its circumferential direction. It should be noted that: out of the multiple first support holes 69, only one first support hole 69 is shown in Fig. 2; and the illustration of the other first support holes 69 is omitted in Fig. 2.

A shroud ring 71 is provided at a position where the shroud ring 71 is separated away from, and opposed to, the nozzle ring 65 in the left-right direction. The shroud ring 71 is provided integrally and coaxially with the turbine impeller 45 by use of the multiple connecting pins 67. Meanwhile, multiple second support holes 73 (albeit only one support hole 73 is shown) are formed in the shroud ring 71 at equal intervals in the circumferential direction of the shroud ring 71. The second support holes 73 are formed to match the first support holes 69 in the nozzle ring 65, respectively. It should be noted that: out of the multiple second support holes 73, only one second support hole 73 is shown in Fig. 2; and the illustration of the other second support holes 73 is omitted in Fig. 2. Furthermore, the shroud ring 71 has a cylindrical shroud portion 75 for covering outer edges of the multiple turbine blades 49 on its inner peripheral edge side. Incidentally, the multiple connecting pins 67 have a function of setting a clearance between the opposed surfaces of the nozzle ring 65 and the shroud ring 71 which are opposed to each other.

Between the opposed surfaces of the nozzle ring 65 and the shroud ring 71 which are opposed to each other, multiple variable nozzles 77 are arranged at equal intervals in the circumferential direction of the nozzle ring 65 (or the shroud ring 71). Each variable nozzle 77 is provided in a way that the variable nozzle 77 is turnable in forward and reverse directions (opening and closing directions) around its axial center in parallel with the axial center C of the turbine impeller 45. In addition, a first nozzle shaft 79 is integrally formed on the right side surface of each variable nozzle 77 (a surface on one side in the axial direction of the rotor shaft 5). The first nozzle shaft 79 of each variable nozzle 77 is turnably supported by the corresponding first support hole 69 in the nozzle ring 65. Moreover, on the left side surface of each variable nozzle 77 (a surface on the opposite side in the axial direction of the rotor shaft 5), a second nozzle shaft 81 is formed coaxially and integrally with the corresponding first nozzle shaft 79. The second nozzle shaft 81 of each variable nozzle 77 is turnably supported by the corresponding second support hole 73 in the shroud ring 71.

The variable-geometry turbocharger 1 includes an annular link chamber 83 formed between the bearing housing 3 and the nozzle ring 65. A link mechanism (a synchronization mechanism) 85 is arranged in the link chamber 83. The link mechanism 85 synchronously turns the multiple variable nozzles 77 in the forward and reverse directions (in the opening and closing direction) . In addition, the link mechanism 85 is formed from a publicly known component which is shown in Japanese Patent Application Laid-Open Publication No. 2009-243431, Japanese Patent Application Laid-Open Publication No. 2009-243300 or the like. The link mechanism 85 is connected via a power transmission mechanism 87 to a turn actuator (whose illustration is omitted), such as a motor or cylinder, configured to turn the multiple variable nozzles 77 in the opening and closing directions.

The variable-geometry turbocharger 1 includes a seal structure 89 which is used to execute a regenerating operation for the filter 59, and configured to inhibit the leakage of the unburned fuel liquefied after the operation is stopped. As shown in Fig. 1, the seal structure 89 inhibits the unburned fuel from leaking from between a bottom surface (an inner side surface) 43f of the fitting recessed portion 43 in the turbine housing 37 and the left side surface of the flange 13 of the bearing housing 3.

As shown in Fig. 1, an annular mounting groove 91, as a mounting step portion, is formed in the bottom surface 43f of the fitting recessed portion 43. A gasket 93 is shaped like a ring, and provided in the mounting groove 91. The cross-sectional shape of the gasket 93 is arbitrary as long as the cross-sectional shape secures the intended function and the desired mechanical strength for the gasket. For example, the cross-sectional shape may be shaped like the letter U, V or C which is opened toward the center axis. Otherwise, the gasket 93 does not have to have an opening, like a so-called O-ring. A coating film 95 containing molybdenum disulfide is formed on an outer surface of the gasket 93. The coating film 95 is formed by baking, for example. It should be noted that the method of forming the coating film 95 is not limited to baking as long as the method secures desired conditions such as adhesion to an opponent surface, and mechanical strength. The gasket 93 is pressed by and held between a bottom surface (an inner side surface) 91f of the mounting groove 91 and the left side surface of the flange 13. It should be noted that the bottom surface of the mounting groove 91 and the left side surface of the flange 13 are formed by machining such as cutting and polishing. For this reason, the bottom surface of the mounting groove 91 and the left side surface of the flange 13 can have sufficiently fine surface roughness and flatness.

It should be noted that the seal structure 89 also inhibits the exhaust gas from leaking from between the bottom surface 43f of the fitting recessed portion 43 and the left side surface of the flange 13 while the variable-geometry turbocharger 1 is in operation.

Descriptions will be provided for how the embodiment of the present invention works, and what effects the embodiment of the present invention has.

The exhaust gas introduced from the gas introduction port 51 passes through the turbine scroll passage 53, and flows from the inlet to outlet sides of the turbine impeller 45. While the exhaust gas is flowing, the rotational force (the torque) is produced by use of the pressure energy of the exhaust gas. Accordingly, the rotor shaft 5 and the compressor impeller 23 can be rotated integrally with the turbine impeller 45. For this reason, the air introduced from the air introduction port 29 can be compressed and discharged from the air discharge port 35 via the diffuser passage 31 and the compressor scroll passage 33. The air to be supplied to the engine can thus be supercharged (compressed).

While the variable-geometry turbocharger 1 is in operation, if the flow rate of the exhaust gas is larger because the engine speed is in a high speed range, the turn actuator synchronously turns the multiple variable nozzles 77 in the forward direction (in the opening direction) while operating the link mechanism 85. In this case, the gas passage area of the exhaust gas to be supplied to the turbine impeller 45 side (the throat area of each variable nozzle 77) increases. In other words, the amount of the exhaust gas to be supplied to the turbine impeller 45 increases. On the other hand, if the flow rate of the exhaust gas is smaller because the engine speed is in a low speed range, the turn actuator synchronously turns the multiple variable nozzles 77 in the reverse direction (in the closing direction) while operating the link mechanism 85. In this case, the gas passage area of the exhaust gas to be supplied to the turbine impeller 45 side decreases. In other words, the flow rate of the exhaust gas moving toward the turbine impeller 45 is increased, and thereby workload (the rotational force, the torque) of the turbine impeller 45 is secured sufficiently. These make it possible for the turbine impeller 45 to produce the rotational force sufficiently and stably regardless of whether the flow rate of the exhaust gas is large or small.

As described above, the gasket 93 is pressed by and held between the bottom surface 91f of the mounting groove 91 and the left side surface of the flange 13. For this reason, the machined surfaces of the turbine housing 37 and the bearing housing 3 work as seal surfaces (surfaces which come into close contact with the gasket 93) with the gasket 93. In other words, the machined surfaces can sufficiently secure the adhesion (the sealing performance) of the gasket 93 to the two seal surfaces. Particularly, since the coating film 95 made from molybdenum disulfide is formed on the outer surface of the gasket 93, the adhesion of the gasket 93 to the two seal surfaces can be secured the more sufficiently.

After the operation of the variable-geometry turbocharger 1 is stopped, the unburned fuel is likely to enter from between the bottom surface 43f of the fitting recessed portion 43 and the left side surface of the outer peripheral edge portion of the support ring 63, as well as from between the left side surface of the flange 13 and the right side surface of the outer peripheral edge portion of the support ring 63. If the unburned fuel enters through the gaps, the unburned fuel liquefies and reaches the inside of the mounting groove 91 in the turbine housing 37. The mounting groove 91 in the turbine housing 37 is placed outside the support ring 63 in radial directions of the support ring 63. For this reason, the mounting groove 91 can temporarily reserve the liquefied unburned fuel. In other words, the mounting groove 91 in the turbine housing 37 can be made to function as a buffer for the liquefied unburned fuel.

Accordingly, the embodiment makes it possible to more sufficiently secure the adhesion of the gasket 93 to the two seal surfaces which are in contact with the gasket 93, and furthermore to make the mounting groove 91 in the turbine housing 37 function as the buffer for the liquefied unburned fuel. For these reasons, it is possible to inhibit the liquefied unburned fuel from leaking from between the bottom surface 43f of the fitting recessed portion 43 in the turbine housing 37 and the left side surface of the flange 13 of the bearing housing 3. Moreover, the seal structure 89 forms the dual seal structure using the outer peripheral edge portion of the support ring 63 and the gasket 93. This dual seal structure can enhance the sealing performance against the exhaust gas as well.

Referring to Fig. 4, descriptions will be provided for Modification 1 of the embodiment. It should be noted that: as shown in the drawing, reference sign "L" denotes the leftward direction; and reference sign "R" denotes the rightward direction.

### [Modification 1 of the embodiment]

The variable-geometry turbocharger 1 may include a seal structure 97 shown in Fig. 4 instead of the seal structure 89 (see Fig. 1). To put it concretely, the seal structure 97 includes: the bottom surface 43f of the fitting recessed portion 43 in the turbine housing 37; and an annular mounting step portion 99 formed in the left side surface of the flange 13 in the bearing housing 3. In this case, the bottom surface 43f is formed as a flat surface, and the gasket 93 is provided in the mounting step portion 99. For this reason, the gasket 93 is pressed by and held between the bottom surface 43f of the fitting recessed portion 43 and a bottom surface (an inner side surface) 99f of the mounting step portion 99. It should be noted that the bottom surface 43f of the fitting recessed portion 43 and the bottom surface 99f of the mounting step portion 99 are formed by machining such as cutting and polishing. In short, these surfaces are formed as the machined surfaces having sufficiently fine surface roughness and flatness.

The above-described working and effects can be obtained from Modification 1 of the embodiment as well.

Referring to Fig. 5, descriptions will be provided for Modification 2 of the embodiment. It should be noted that: as shown in the drawing, reference sign "L" denotes the leftward direction; and reference sign "R" denotes the rightward direction.

### [Modification 2 of the embodiment]

The variable-geometry turbocharger 1 may include a seal structure 101 shown in Fig. 5 instead of the seal structure 89 or 97 (see Figs. 1 and 4). To put it concretely, the seal structure 101 includes: the annular mounting groove 91 formed in the bottom surface 43f of the fitting recessed portion 43 in the turbine housing 37; and the annular mounting step portion 99 formed in the left side surface of the left flange 13 in the bearing housing 3. Furthermore, the mounting step portion 99 is formed matching the mounting groove 91. For these reasons, the gasket 93 is provided in the mounting groove 91 and the mounting step portion 99, and is pressed by and held between the bottom surface 91f of the mounting groove 91 and the bottom surface 99f of the mounting step portion 99.

Accordingly, the above-described working and effects can be obtained from Modification 2 of the embodiment as well.

It should be noted that he present invention is not limited to the foregoing embodiment, and can be carried out in various modes. Accordingly, the scope of right covered by the present invention is not limited to the embodiment.

### [Industrial Applicability]

The present invention can provide: a seal structure configured to inhibit a liquid such as fuel from leaking from between two mutually fastened housings; and a variable-geometry turbocharger including the seal structure.

## Claims

1. A variable-geometry turbocharger comprising:
a turbine housing (37) in which a turbine impeller (45) is rotatably provided;
a bearing housing (3) in which a rotor shaft (5) connected with the turbine impeller (45) is rotatably provided;
a variable nozzle unit (61) capable of altering a passage area of an exhaust gas to be supplied to the turbine impeller (45) ;
a support ring (63) attached to the variable nozzle unit (61), including an outer peripheral edge portion pressed by and held between a side surface of the turbine housing (37) and a side surface of the bearing housing (3);
and a seal structure (89) configured to inhibit liquefied unburned fuel from leaking from between the side surface of the turbine housing (37) and the side surface of the bearing housing (3), the liquefied unburned fuel used for regenerating a filter (59) arranged downstream of an outlet of the turbine impeller (45) in the variable-geometry turbocharger,
the seal structure (89) comprising:
at least one annular mounting step portion (91, 99) formed in at least one of the side surface of the turbine housing (37) and the side surface of the bearing housing (3) outside the support ring (63) in radial directions of the support ring (63) ; and
an annular gasket (93) provided in the mounting step portion (91,99),
wherein the gasket (93) is pressed by and held between a bottom surface of the mounting step portion (91) in the turbine housing (37) and the side surface of the bearing housing (3), between a bottom surface of the mounting step portion (99) in the bearing housing (3) and the side surface of the turbine (37) housing, or between the bottom surface of the mounting step portion (91) in the turbine housing (37) and the bottom surface of the mounting step portion (99) in the bearing housing (3).

2. The variable-geometry turbocharger according to claim 1, wherein
the bearing housing includes a flange (13) having the side surface of the bearing housing (37),
the turbine housing (37) includes a fitting recessed portion (43) which is formed in the side surface of the turbine housing (37), and into which the flange (13) is fitted,
the mounting step portion (91,99) is formed in at least one of a bottom surface of the fitting recessed portion (43) in the turbine housing (37), and the side surface of the flange (13) in the bearing housing (3), and
the gasket (93) is pressed by and held between the bottom surface of the mounting step portion (91) in the turbine housing (37) and the side surface of the flange (13) in the bearing housing (3), between the bottom surface of the mounting step portion (99) in the bearing housing (3) and the bottom surface of the fitting recessed portion (43) in the turbine housing (37), or between the bottom surface of the mounting step portion (99) in the turbine housing and the bottom surface of the mounting step portion in the bearing housing (3).

3. The variable-geometry turbocharger according to claim 1 or 2, wherein a coating film (95) made from molybdenum disulfide is formed on an outer surface of the gasket (93).

4. The variable-geometry turbocharger according to any one of claims 1 to 3, wherein the annular gasket (93) has a U-shaped, V-shaped or C-shaped cross-section opened towards the axis (C) of the turbine impeller (45).

## Patentansprüche

1. Turbolader mit veränderlicher Geometrie, Folgendes umfassend:
ein Turbinengehäuse (37), in dem ein Turbinenschaufelrad (45) drehbar bereitgestellt ist;
ein Kugellagergehäuse (3), in dem eine Rotorwelle (5), mit dem Turbinenschaufelrad (45) verbunden, drehbar bereitgestellt ist;
eine variable Düseneinheit (61), befähigt zum Verändern einer Durchgangsfläche eines Abgases, das dem Turbinenschaufelrad (45) zuzuführen ist;
einen Stützring (63), der an die variable Düseneinheit (61) befestigt ist, einschließlich eines äußeren peripheren Randabschnitts, der zwischen einer Seitenoberfläche des Turbinengehäuses (37) und einer Seitenoberfläche des Kugellagergehäuses (3) gedrückt und gehalten wird;
und eine Dichtungsstruktur (89), dazu konfiguriert, verflüssigten unverbrannten Brennstoff daran zu hindern, zwischen der Seitenoberfläche des Turbinengehäuses (37) und der Seitenoberfläche des Kugellagergehäuses (3) zu lecken, wobei der verflüssigte unverbrannte Brennstoff, der zum Regenerieren eines Filters (59) verwendet wird, im Turbolader mit veränderlicher Geometrie einem Austritt des Turbinenschaufelrads (45) nachgeschaltet angeordnet ist,
die Dichtungsstruktur (89), Folgendes umfassend:
mindestens einen ringförmigen Montagestufenabschnitt (91, 99), geformt in mindestens einer der Seitenoberfläche des Turbinengehäuses (37) und der Seitenoberfläche des Kugellagergehäuses (3) außerhalb des Stützrings (63) in radialen Richtungen des Stützrings (63); und
eine ringförmige Dichtung (93), die im Montagestufenabschnitt (91, 99) bereitgestellt ist,
worin die Dichtung (93) gedrückt und gehalten wird zwischen einer unteren Oberfläche des Montagestufenabschnitts (91) im Turbinengehäuse (37) und der Seitenoberfläche des Kugellagergehäuses (3), zwischen einer unteren Oberfläche des Montagestufenabschnitts (99) im Kugellagergehäuse (3) und der Seitenoberfläche des Turbinengehäuses (37) oder zwischen der unteren Oberfläche des Montagestufenabschnitts (91) im Turbinengehäuse (37) und der unteren Oberfläche des Montagestufenabschnitts (99) im Kugellagergehäuse (3).

2. Turbolader mit veränderlicher Geometrie nach Anspruch 1, worin
das Kugellagergehäuse einen Flansch (13) enthält mit der Seitenoberfläche des Kugellagergehäuses (3),
das Turbinengehäuse (37) einen eingelassenen Einpassungsabschnitt (43) enthält, der in der Seitenoberfläche des Turbinengehäuses (37) geformt ist und in den der Flansch (13) eingepasst ist,
der Montagestufenabschnitt (91, 99) in mindestens einem von Folgenden geformt ist: einer Seitenoberfläche des eingelassenen Einpassungsabschnitts (43) im Turbinengehäuse (37) und der Seitenoberfläche des Flanschs (13) im Kugellagergehäuse (3), und
die Dichtung (93) gedrückt und gehalten wird zwischen der unteren Oberfläche des Montagestufenabschnitts (91) im Turbinengehäuse (37) und der Seitenoberfläche des Flanschs (13) im Kugellagergehäuse (3), zwischen der unteren Oberfläche des Montagestufenabschnitts (99) im Kugellagergehäuse (3) und der unteren Oberfläche des eingelassenen Einpassungsabschnitts (43) im Turbinengehäuse (37) oder zwischen der unteren Oberfläche des Montagestufenabschnitts (99) im Turbinengehäuse und der unteren Oberfläche des Montagestufenabschnitts im Kugellagergehäuse (3).

3. Turbolader mit veränderlicher Geometrie nach Anspruch 1 oder 2, worin ein Anstrichfilm (95) aus Molybdändisulfid auf einer äußeren Oberfläche der Dichtung (93) geformt ist.

4. Turbolader mit veränderlicher Geometrie nach einem der Ansprüche 1 bis 3, worin die ringförmige Dichtung (93) einen U-förmigen, V-förmigen oder C-förmigen Querschnitt hat, der in Richtung auf die Achse (C) des Turbinenschaufelrads (45) geöffnet ist.

## Revendications

1. Turbocompresseur de suralimentation à géométrie variable comprenant :
un carter de turbine (37) à l'intérieur duquel une pale de turbine (45) est prévue à rotation ;
un carter de palier (3) à l'intérieur duquel un arbre de rotor (5) qui est connecté à la pale de turbine (45) est prévu à rotation ;
une unité de tuyère variable (61) disposant de la capacité d'altérer une aire de passage d'un gaz d'échappement qui est destiné à être alimenté vers la pale de turbine (45) ;
une bague de support (63) qui est fixée à l'unité de tuyère variable (61), qui inclut une partie de bord périphérique externe qui est pressée par et maintenue entre une surface latérale du carter de turbine (37) et une surface latérale du carter de palier (3) ;
et une structure de joint étanche (89) qui est configurée de manière à ce qu'elle empêche la fuite d'un carburant non brûlé liquéfié depuis entre la surface latérale du carter de turbine (37) et la surface latérale du carter de palier (3), le carburant non brûlé liquéfié étant utilisé pour régénérer un filtre (59) qui est agencé en aval d'une sortie de la pale de turbine (45) dans le turbocompresseur de suralimentation à géométrie variable ;
la structure de joint étanche (89) comprenant :
au moins une partie de marche de montage annulaire (91, 99) qui est formée dans au moins l'une parmi la surface latérale du carter de turbine (37) et la surface latérale du carter de palier (3) à l'extérieur de la bague de support (63) dans des directions radiales de la bague de support (63) ; et
une garniture d'étanchéité annulaire (93) qui est prévue dans la partie de marche de montage (91, 99) ;
dans lequel la garniture d'étanchéité (93) est pressée par et maintenue entre une surface de fond de la partie de marche de montage (91) dans le carter de turbine (37) et la surface latérale du carter de palier (3), entre une surface de fond de la partie de marche de montage (99) dans le carter de palier (3) et la surface latérale du carter de turbine (37) ou entre la surface de fond de la partie de marche de montage (91) dans le carter de turbine (37) et la surface de fond de la partie de marche de montage (99) dans le carter de palier (3).

2. Turbocompresseur de suralimentation à géométrie variable selon la revendication 1, dans lequel :
le carter de palier inclut un flanc (13) qui comporte la surface latérale du carter de palier (3) ;
le carter de turbine (37) inclut une partie évidée d'ajustement (43) qui est formée dans la surface latérale du carter de turbine (37), et à l'intérieur de laquelle le flanc (13) est ajusté ;
la partie de marche de montage (91, 99) est formée dans au moins l'une parmi une surface de fond de la partie évidée d'ajustement (43) dans le carter de turbine (37) et la surface latérale du flanc (13) dans le carter de palier (3) ; et
la garniture d'étanchéité (93) est pressée par et maintenue entre la surface de fond de la partie de marche de montage (91) dans le carter de turbine (37) et la surface latérale du flanc (13) dans le carter de palier (3), entre la surface de fond de la partie de marche de montage (99) dans le carter de palier (3) et la surface de fond de la partie évidée d'ajustement (43) dans le carter de turbine (37) ou entre la surface de fond de la partie de marche de montage (99) dans le carter de turbine et la surface de fond de la partie de marche de montage dans le carter de palier (3).

3. Turbocompresseur de suralimentation à géométrie variable selon la revendication 1 ou 2, dans lequel un film de revêtement (95) réalisé à partir de disulfure de molybdène est formé sur une surface externe de la garniture d'étanchéité (93).

4. Turbocompresseur de suralimentation à géométrie variable selon l'une quelconque des revendications 1 à 3, dans lequel la garniture d'étanchéité annulaire (93) présente une section en coupe transversale en forme de U, en forme de V ou en forme de C qui débouche en direction de l'axe (C) de la pale de turbine (45).
